# EUROPÄISCHE PATENTSCHRIFT

(11) **EP 3 120 908 B1**
(45) Veröffentlichungstag und Bekanntmachung des Hinweises auf die Patenterteilung: **05.08.2020**
(21) Anmeldenummer: 16174348.9
(22) Anmeldetag: 14.06.2016
(51) Int. Cl.: G01F 23/00, B01D 17/12, B01D 17/02, B01D 21/30, B01D 21/34, G01F 23/296

(54) **VERFAHREN UND VORRICHTUNG ZUM ÜBERWACHEN EINES ABSCHEIDERS**
METHOD AND DEVICE FOR MONITORING A SEPARATOR
PROCEDE ET DISPOSITIF DESTINES A LA SURVEILLANCE D'UN SEPARATEUR

(30) Priorität: 24.07.2015 DE 102015009592
(43) Veröffentlichungstag der Anmeldung: 25.01.2017
(73) Patentinhaber: FAFNIR GmbH, 22765 Hamburg (DE)
(72) Erfinder: Nachtigal, Uwe, 22397 Hamburg (DE)
(74) Vertreter: Uexküll & Stolberg

(56) Entgegenhaltungen:
- EP-A1- 1 992 920
- AT-B- 378 946
- DE-A1- 19 839 112
- DE-U1- 9 419 621
- DE-U1- 29 904 406
- US-A1- 2006 169 039

## Beschreibung

Die Erfindung betrifft ein Verfahren zum Überwachen eines Abscheiders sowie eine Vorrichtung zur Durchführung des Verfahrens.

Die Abtrennung von Schmutz und Schadstoffen aus Abwässern ist ein wichtiger Beitrag zum Umweltschutz. Daher sind solche Trennanlagen für die verschiedensten Anwendungen schon seit vielen Jahren vorgeschrieben und Stand der Technik. Als Beispiel seien genannt die Abscheider im Bereich von industriellen Produktionsprozessen, aber auch die Reinigung von Oberflächenwässern, wie sie an Straßen oder Tankstellen bei Regenfällen auftreten. Diese Schmutzwässer enthalten Schwebeteilchen, aber häufig auch sogenannte Leichtflüssigkeiten. Die Reinigung kann, wenn nicht zusätzliche nicht trennbare Chemikalien in dem Schmutzwasser enthalten sind, in sogenannten Abscheidern erfolgen. Derartige Abscheider sind daher in großen Stückzahlen im Einsatz.

Ein Abscheider weist häufig eine vorgeschaltete Beruhigungskammer auf, in der sich Schwebeteilchen als Schlamm absetzen können. In einer weiteren Stufe, meist mit einer Koaleszenzstufe, werden dann die zunächst als feinverteilte Tröpfchen vorhandenen Leichtflüssigkeiten (z.B. Kraftstoffe, Öl) zur Abscheidung gebracht. Da Leichtflüssigkeiten leichter sind als das Trägerwasser, sammelt sich die Leichtflüssigkeit als Oberflächenschicht und kann dann zu gegebener Zeit abgepumpt werden. Das von den Schwebeteilchen und den Leichtflüssigkeiten befreite Wasser kann dann in ein Regenwassersiel abgegeben werden. In der Regel arbeiten derartige Abscheider ohne Pumpen und Ventile, die mit Hilfsenergie versorgt werden müssten.

Jedoch ist es notwendig, dass ein Abscheider auf seinen Zustand überwacht wird, um eine Überfüllung mit Schlamm zu vermeiden und einen Durchtritt der Leichtflüssigkeit in den Auslass (Ablauf) zu verhindern. Hierzu wird noch überwiegend eine manuelle Inspektion angewendet. Da die Belastung eines Abscheiders zeitlich stark schwanken kann, müssen die Inspektionsintervalle kürzer angesetzt werden, als in der Regel notwendig ist. Wegen dieses Aufwandes werden zunehmend automatische Überwachungssysteme eingesetzt, die es ermöglichen, Inspektionen belastungsangepasst durchzuführen, die dadurch viel weniger häufig erforderlich werden.

Es sind mehrere solcher Überwachungssysteme entwickelt worden. In der Regel wird ein Messsystem benötigt, das die Schichtdicke der Leichtflüssigkeit bestimmt bzw. bei Überschreitung einer vorgegebenen Schichtdicke einen Alarm generiert. Ein weiteres Messsystem bestimmt optional den Pegel der Sinkstoffe (Schlammspiegel), und ein drittes Messsystem wird benötigt, um eine unzulässige Überschreitung des gesamten Flüssigkeitspegels zu bestimmen, der auftritt, wenn die Ablaufleitung eine Verstopfung aufweist (Aufstau- oder Überflutungssensor). Ein umfangreiches Überwachungssystem, das mit mehreren Ultraschallsensoren die verschiedenen Pegel in einem Abscheidersystem bestimmt und überwacht, wird in US 5,946,967 offenbart. In DE 43 08 996 C2 wird ein Messsystem beschrieben, das über eine Widerstandsmessung eine Fettschichtdicke bestimmt. Ein solches Messystem kann allerdings versagen, wenn sich eine Fettschicht auf den dabei benutzten Elektroden abgesetzt hat. DE 10 2012 018 149 A1 zeigt ein Messsystem, das über die von abgelagertem Schlamm ausgeübten Seitendruckkräfte den Schlammspiegel bestimmen kann. In DE 20 2010 015 760 U1 wird ein Aufstau- oder Überflutungssensor beschrieben, der ebenfalls nach dem Ultraschallprinzip arbeitet. In all diesen Fällen wird jedoch für jede Überwachungsaufgabe ein eigenes Messsystem benötigt.

AT 378 946 B zeigt ein Verfahren zum Steuern eines Abscheiders, bei dem sich in einer Kammer eine leichtere Flüssigkeit über einer schwereren Flüssigkeit sammelt. In letztere taucht ein Rohr mit einer Rohröffnung ein, das mit einem oberhalb der Rohröffnung aus der Kammer herausführenden Ablauf verbunden ist. Ein Schwimmer ist zum Schwimmen an der Grenzfläche zwischen der schwereren und der leichteren Flüssigkeit eingerichtet und verschließt die Rohröffnung, wenn sich so viel Leichtflüssigkeit in der Kammer angesammelt hat, dass die Grenzfläche einen bestimmten Pegelstand unterschritten hat.

Aus EP 1 992 920 A1 ist ein magnetostriktives Füllstandmesssystem bekannt, bei dem ein mit einem Magneten versehener Schwimmer an einer Führungseinrichtung geführt wird, die einen magnetostriktiven Messdraht enthält. Der Schwimmer schwimmt an der Grenzfläche zu Luft. Seine Position kann elektronisch erfasst werden.

Es ist Aufgabe der Erfindung, eine Möglichkeit zum zuverlässigen Überwachen eines Abscheiders zu schaffen, die mit weniger Messkomponenten auskommt als die vorbekannten Überwachungssysteme und dadurch kostengünstiger ist.

Diese Aufgabe wird gelöst durch das Verfahren zum Überwachen eines Abscheiders mit den Merkmalen des Anspruchs 1 und durch die Vorrichtung zur Überwachung eines Abscheiders mit den Merkmalen des Anspruchs 6. Vorteilhafte Ausgestaltungen der Erfindung ergeben sich aus den Unteransprüchen.

Das erfindungsgemäße Verfahren zum Überwachen eines Abscheiders eignet sich für einen Abscheider, bei dem sich in einer Kammer eine (spezifisch) leichtere Flüssigkeit (z.B. Kraftstoff oder Öl) über einer (spezifisch) schwereren Flüssigkeit (z.B. Wasser) sammelt, da sich die leichtere Flüssigkeit nicht oder nur geringfügig mit der schwereren mischt, so dass sich separierte Phasen ausbilden. In die Flüssigkeiten taucht ein Rohr ein, das eine Rohröffnung aufweist (z.B. am unteren Ende) und mit einem oberhalb der Rohröffnung aus der Kammer herausführenden Ablauf verbunden ist. Der Ablauf definiert ein Ablaufniveau, das im Regelfall (z.B. kein Starkregen, Ablauf nicht durch Verschmutzungen behindert) geringfügig oberhalb der tiefsten Stelle der Ablauföffnung (an der das Rohr in den Ablauf einmündet, z.B. an der Wandung der Kammer) liegt.

Erfindungsgemäß taucht in die Flüssigkeiten eine Führungseinrichtung eines magnetostriktiven Positionsmesssystems ein, die einen magnetostriktiven Messdraht enthält und einen mit einem Magneten versehenen ersten Schwimmer führt. Der erste Schwimmer ist zum Schwimmen an der Grenzfläche zwischen der schwereren und der leichteren Flüssigkeit eingerichtet. Dies ist der Fall, wenn der Quotient aus Masse und Volumen des Schwimmers kleiner als die Dichte der schwereren Flüssigkeit (z.B. bei Wasser etwa 1,0 kg/l), aber größer als die Dichte der leichteren Flüssigkeit (z.B. bei Öl etwa 0,9 kg/l) ist. Die Position des ersten Schwimmers wird über eine Steuer- und Auswerteeinrichtung für das magnetostriktive Positionsmesssystem überwacht.

Magnetostriktive Positionsmesssysteme sind bekannt und werden zum Beispiel zur Tankinhaltsmessung verwendet, siehe z.B. US 3,898,555. Solche Messsysteme sind relativ kostengünstig und zuverlässig und in der Lage, die Position von einem oder mehreren Schwimmern zu detektieren. Als Führungseinrichtung kann ein allgemein vertikal montiertes Rohr dienen, in dessen Innenraum ein magnetostriktiver Messdraht und in der Regel ein Rückdraht angeordnet sind. Am oberen Rohrende lassen sich diese Drähte an eine Messelektronik anschließen, die Teil der Steuer- und Auswerteeinrichtung sein kann. Ferner kann die Steuer- und Auswerteeinrichtung z.B. Datenleitungen und einen Spezialrechner und/oder einen handelsüblichen Computer aufweisen, wie einem Fachmann allgemein bekannt.

Die Steuer- und Auswerteeinrichtung kann mittels der Position des ersten Schwimmers eine Kennzeichnung für die Menge an leichterer Flüssigkeit (Leichtflüssigkeit) in der Kammer erzeugen. Denn wenn sich durch Zulauf von Leichtflüssigkeit die Dicke der separierten Schicht der Leichtflüssigkeit vergrößert, dann sinkt der erste Schwimmer ab, weil gleichzeitig die schwerere Flüssigkeit (z.B. Wasser) über das Rohr in den Ablauf gedrückt wird, während der Spiegel der Leichtflüssigkeit im Normalbetrieb weitgehend konstant ist und nur geringfügig über das Ablaufniveau ansteigt. Die Position des ersten Schwimmers ist damit ein quantitatives Maß für die Menge an Leichtflüssigkeit in der Kammer. Dies kann auf einem entfernt liegenden Auswertegerät zur Anzeige gebracht werden, z.B. einer Komponente der Steuer- und Auswerteeinrichtung. Als Kennzeichnung kann dabei z.B. ein Signal in kodierter Form oder eine direkte Angabe der Menge an Leichtflüssigkeit (z.B. in l) dienen.

Auf keinen Fall darf die Kammer so viel Leichtflüssigkeit enthalten, dass die Grenzfläche zwischen der schwereren und der leichteren Flüssigkeit unter die Rohröffnung sinkt, denn dann würde Leichtflüssigkeit in den Ablauf gedrückt. Daher kann dem Betreiber eine Warnung signalisiert werden, wenn die Position des ersten Schwimmers einen vorbestimmten Pegel unterschreitet. Dieser Grenzpegel wird so gewählt, dass keine Leichtflüssigkeit in den Ablauf austreten kann. Die Leichtflüssigkeit muss bei Erreichen des Grenzpegels abgepumpt und entsorgt werden.

Das erfindungsgemäße Verfahren erlaubt somit eine zuverlässige Überwachung der Menge an Leichtflüssigkeit in dem Abscheider aus der Ferne, wodurch sich unnötige Kontrollen direkt am Abscheider vermeiden lassen.

Ferner überwacht bei dem erfindungsgemäßen Verfahren die Steuer- und Auswerteeinrichtung die Position des ersten Schwimmers als Funktion der Zeit, wozu vorzugsweise der zeitliche Verlauf der Position des ersten Schwimmers (und optional die Position eines zweiten Schwimmers, siehe unten) gespeichert wird. Dabei erzeugt die Steuer- und Auswerteeinrichtung eine Kennzeichnung (z.B. ein Alarmsignal) für einen behinderten Ablauf aus der Kammer, wenn die Position des ersten Schwimmers innerhalb eines vorgegebenen Zeitintervalls um mehr als einen vorgegebenen Wert ansteigt.

Denn wenn die Zulaufgeschwindigkeit von Flüssigkeit in den Abscheider größer wird als die Ablaufgeschwindigkeit über den Ablauf, kann ein kritischer Zustand des Abscheiders eintreten. Zum Beispiel bewirken Verschmutzungen oder Ablagerungen (z.B. durch Blätter, Zweige, Plastikabfälle) im Ablauf eine Drosselung der Ablaufgeschwindigkeit. Der Abscheider würde bei starkem Zulauf überlaufen und seine Funktion nicht mehr erfüllen können. Daher sollte ein evtl. auftretender Aufstau erkannt werden, damit eine Überflutungswarnung an den Betreiber signalisiert werden kann. Z.B. bei Starkregen und dadurch starken Zulauf erhöht sich in der Regel der Gesamtpegel im Abscheider (also die Position der Oberfläche der leichteren Flüssigkeit) etwas. Dies ist jedoch unkritisch, solange dieser Pegel das obere Ende der Ablauföffnung nicht wesentlich überschreitet und der dadurch bedingte zusätzliche hydrostatische Druck einen kontinuierlichen Ablauf bewirkt, so dass der Pegel nicht weiter steigt. Bei stärkeren Verschmutzungen im Ablauf kann dagegen eine kritische Aufstausituation eintreten.

Wenn der Gesamtpegel schnell ansteigt, ist die Ursache also in aller Regel ein starker Zulauf an schwererer Flüssigkeit, was sich auch an einem Anstieg der Position des ersten Schwimmers zeigt. Da die zunächst vorhandene Position des ersten Schwimmers bereits bekannt ist, kann die Erhöhung in Bezug darauf ausgewertet und so ein auftretender Aufstau erkannt werden. Wenn also die Position des ersten Schwimmers innerhalb eines vorgegebenen Zeitintervalls um mehr als einen vorgegebenen Wert ansteigt, lässt sich eine Überflutungswarnung an den Betreiber ausgeben.

Die Erfindung ermöglicht es demnach, mit einem einzigen relativ kostengünstigen Messsystem die Menge an Leichtflüssigkeit in dem Abscheider zu erfassen und außerdem einen Aufstau zu erkennen.

Im Prinzip ist es denkbar, wenn auch sehr unwahrscheinlich, dass bei einem drohenden Aufstau bei starkem Zufluss an schwererer Flüssigkeit (z.B. Wasser) gleichzeitig eine zeitlich gleich große Menge an Leichtflüssigkeit eingeschwemmt wird, so dass sich die Position des ersten Schwimmers nicht wesentlich ändert. Um auch noch bei dieser Situation eine sichere Überwachung zu ermöglichen, kann die Führungseinrichtung einen mit einem Magneten versehenen zweiten Schwimmer führen, der zum Schwimmen an der Oberfläche der leichteren Flüssigkeit eingerichtet ist. Dabei erzeugt die Steuer- und Auswerteeinrichtung eine Kennzeichnung für einen behinderten Ablauf aus der Kammer (z.B. ein Alarmsignal), wenn die Position des zweiten Schwimmers einen vorgegebenen Wert übersteigt.

Damit der zweite Schwimmer auf der Leichtflüssigkeit schwimmt, muss der Quotient aus seiner Masse und seinem Volumen geringer sein als die Dichte der Leichtflüssigkeit. Die Position mehrerer, zueinander längs des Messdrahts beabstandeter Magnete lässt sich mit Hilfe von handelsüblichen magnstostriktiven Messsystemen bestimmen.

Vorzugsweise ist im Normalbetrieb (d.h., wenn kein Aufstau stattfindet) der zweite Schwimmer an einer Auflagefläche gelagert, die oberhalb des Ablaufniveaus angebracht ist. Diese Auflagefläche kann z.B. durch einen verstellbaren Klemmring bereitgestellt werden, der an der Führungseinrichtung gelagert ist. Im Normalbetrieb taucht der zweite Schwimmer also nicht in Flüssigkeit ein, da er auf der Auflagefläche aufliegt. Die Position der Auflagefläche kann so gewählt werden, dass der zweite Schwimmer erst dann von der Auflagefläche abhebt, wenn ein erheblicher Aufstau vorliegt. Dies kann dem Betreiber in geeigneter Form übermittelt werden, zum Beispiel mit dem Aufstauverlauf (zeitlicher Verlauf der Position des zweiten Schwimmers) oder mit einer Anzeige nach Dauer des Aufstaus und Maximalpegel (höchster Wert der Position des zweiten Schwimmers). Dadurch, dass der zweite Schwimmer im Normalbetrieb nicht mit möglicherweise verschmutzter Flüssigkeit in Berührung kommt, ist die Gefahr einer Behinderung des zweiten Schwimmers durch Verschmutzung und Verklebung sehr gering, was die Zuverlässigkeit der Überwachung erhöht.

Eine erfindungsgemäße Vorrichtung zur Überwachung eines Abscheiders, bei dem sich in einer Kammer eine leichtere Flüssigkeit über einer schwereren Flüssigkeit sammelt, in die ein Rohr eintaucht, das eine Rohröffnung aufweist und mit einem oberhalb der Rohröffnung aus der Kammer herausführenden Ablauf verbunden ist, der ein Ablaufniveau definiert, enthält ein magnetostriktives Positionsmesssystem und eine Steuer- und Auswerteeinrichtung für das magnetostriktive Positionsmesssystem. Dabei weist das magnetostriktive Positionsmesssystem eine zum Eintauchen in die Flüssigkeiten eingerichtete Führungseinrichtung auf, die einen magnetostriktiven Messdraht enthält und einen mit einem Magneten versehenen ersten Schwimmer führt, der zum Schwimmen an der Grenzfläche zwischen der schwereren und der leichteren Flüssigkeit eingerichtet ist. Die Steuer- und Auswerteeinrichtung für das magnetostriktive Positionsmesssystem ist dazu eingerichtet, die Position des ersten Schwimmers als Funktion der Zeit zu überwachen und eine Kennzeichnung für einen behinderten Ablauf aus der Kammer zu erzeugen, wenn die Position des ersten Schwimmers innerhalb eines vorgegebenen Zeitintervalls um mehr als einen vorgegebenen Wert ansteigt.

Die Steuer- und Auswerteeinrichtung enthält zumindest die zum Betreiben des magnetostriktiven Positionsmesssystems erforderliche Messelektronik, kann aber auch noch weitere Komponenten aufweisen, z.B. einen externen Computer.

Vorzugsweise führt die Führungseinrichtung einen mit einem Magneten versehenen zweiten Schwimmer, der zum Schwimmen an der Oberfläche der leichteren Flüssigkeit eingerichtet ist, wobei im Normalbetrieb der zweite Schwimmer an einer Auflagefläche gelagert sein kann, die oberhalb des Ablaufniveaus angebracht ist.

Möglichkeiten für die Einrichtung der Steuer- und Auswerteeinrichtung der erfindungsgemäßen Vorrichtung ergeben sich aus der obigen Erläuterung der Möglichkeiten für den Verfahrensablauf. Die Einrichtung der Steuer- und Auswerteeinrichtung lässt sich mit Hardware- und/oder Softwaremitteln erreichen, wie dem Fachmann allgemein bekannt.

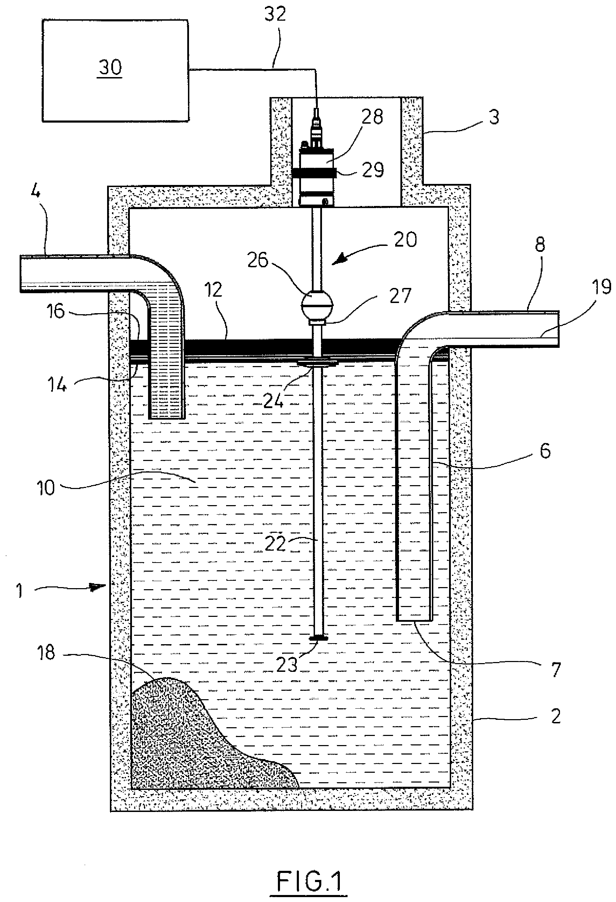

Im Folgenden wird die Erfindung anhand eines Ausführungsbeispiels weiter beschrieben. Die Zeichnung zeigt in
- Figur 1: einen schematischen Längsschnitt durch einen Abscheider, bei dem sich in einer Kammer eine leichtere Flüssigkeit über einer schwereren Flüssigkeit sammelt, mit einer Vorrichtung zur Überwachung des Abscheiders gemäß einem Ausführungsbeispiel der Erfindung.

Die Figur 1 zeigt einen handelsüblichen Abscheider 1, mit dem Leichtflüssigkeiten wie z.B. Ottokraftstoffe, Dieselkraftstoffe und/oder Öle von Wasser separiert und außerdem Feststoffe abgetrennt werden können. Derartige Abscheider finden sich z.B. an der Entwässerung von Tankstellen, wo Regenwasser in der Regel zusammen mit Leichtflüssigkeit und festen Schmutzteilchen anfällt.

Der Abscheider 1 weist eine Kammer 2 mit einem geschlossenen Boden und einem Aufsatz 3 auf. Über einen Zulauf 4 gelangt eine Mischung aus Wasser, Leichtflüssigkeit und Schmutzteilchen in die Kammer 2. Ein weitgehend vertikal eingebautes, relativ langes Rohr 6 mit einer Rohröffnung 7 an seinem unteren Ende ist mit einem Ablauf 8 verbunden, der durch die Wandung der Kammer 2 nach draußen und zum Kanalisationsnetz führt.

Wenn die über den Zulauf 4 in die Kammer 2 gelangende Mischung zur Ruhe kommt, scheidet sich das Wasser als (spezifisch) schwerere Flüssigkeit 10 von der (spezifisch) leichteren Flüssigkeit 12 ab, da sich die Leichtflüssigkeit allenfalls geringfügig in Wasser löst. Bei Bedarf kann eine zusätzliche Beruhigungskammer verwendet werden (in Figur 1 nicht eingezeichnet), um eine effizientere Trennung zu erreichen. Zwischen der schwereren Flüssigkeit 10 (im Folgenden: Wasser) und der leichteren Flüssigkeit 12 (im Folgenden: Leichtflüssigkeit) bildet sich eine Grenzfläche 14 aus. Die Oberfläche der Leichtflüssigkeit 12 ist mit 16 bezeichnet. Unter dem Zulauf 4 sammeln sich Feststoffe 18 an.

Die Rohröffnung 7 befindet sich relativ weit unten in der Kammer 2, aber so weit über dem Boden, dass die Kammer eine größere Menge an Feststoffen 18 aufnehmen kann, ohne dass die Rohröffnung 7 verstopft. Wenn über den Zulauf 4 zusätzliche Flüssigkeit in die Kammer 2 gelangt, wird durch den von dem Wasser 10 und der Leichtflüssigkeit 12 ausgeübten hydrostatischen Druck Wasser 10 (aber keine Leichtflüssigkeit 12) durch das Rohr 6 in den Ablauf 8 gedrückt. In dem Ablauf 8 bildet sich ein Ablaufniveau 19 aus, das unter normalen Abflussverhältnissen (kein Starkregen) geringfügig unter der Oberfläche 16 liegt. Im Laufe der Zeit kann sich so immer mehr Leichtflüssigkeit 12 in der Kammer sammeln, wobei die Oberfläche 16 nur geringfügig ansteigt und die Grenzfläche 14 nach unten wandert. Die Oberfläche 16 steigt nur deshalb an, weil die Leichtflüssigkeit 12 eine geringere Dichte als das Wasser 10 hat und daher zum Ausüben eines gegebenen hydrostatischen Drucks mehr Flüssigkeitssäule braucht als Wasser.

Auf keinen Fall darf die Grenzfläche 14 das Niveau der Rohröffnung 7 erreichen, denn dann würde Leichtflüssigkeit 12 in den Ablauf 8 gelangen. Ein weiterer Störfall würde eintreten, wenn der Ablauf 8 so stark verschmutzt ist, dass das Ablaufniveau 19 wesentlich ansteigt, was sich z.B. bei Starkregen bemerkbar macht.

Um solche Situationen zu verhindern bzw. zu erfassen, wird der Abscheider 2 mit Hilfe eines magnetostriktiven Positionsmesssystems 20 überwacht, das im Prinzip von herkömmlicher und dem Fachmann bekannter Bauart ist.

Das magnetostriktive Positionsmesssystem 20 weist ein Rohr 22 auf, das weitgehend vertikal montiert ist und sich bis unterhalb der Rohröffnung 7 erstreckt. Im Innenraum des Rohrs 22 verlaufen ein magnetostriktiver Messdraht und ein Rückdraht (in Figur 1 nicht eingezeichnet). Am unteren Ende des Rohrs 22 ist ein unterer Anschlag 23 angebracht. Das Rohr 22 dient als Führungseinrichtung für einen ersten Schwimmer 24, der mit einem Magneten versehen ist und von seinem Verhältnis von Masse zu Volumen so eingestellt ist, dass er auf dem Wasser 10 schwimmt, in der Leichtflüssigkeit 12 aber untergeht. Daher lässt sich mit dem ersten Schwimmer 24 das Niveau der Grenzfläche 14 erfassen.

Ferner wird auf dem Rohr 22 ein zweiter Schwimmer 26 geführt, der so eingerichtet ist, dass er auf der Leichtflüssigkeit 12 schwimmen kann. In dem in Figur 1 dargestellten normalen Betriebszustand taucht der zweite Schwimmer 26 aber gar nicht in die Leichtflüssigkeit 12 ein, sondern ruht etwas oberhalb der Oberfläche 16 auf einem Stellring 27.

An seinem oberen Ende ist das Rohr 22 mit einem Gehäuse 28 verbunden, das Messelektronik des magnetostriktiven Positionsmesssystems 20 enthält und mit einer Halterung 29 an dem Aufsatz 3 befestigt ist. In Figur 1 ist ferner schematisch eine Steuer- und Auswertevorrichtung 30 eingezeichnet, die über eine Leitung 32 an die Messelektronik in dem Gehäuse 28 angeschlossen ist.

Im Ausführungsbeispiel ist die Messelektronik in dem Gehäuse 28 ein Bestandteil des magnetostriktiven Positionsmesssystems 20, während die Steuer- und Auswertevorrichtung 30 extern angeordnet ist. Dabei kann die Steuer- und Auswertevorrichtung 30 externe Elektronikkomponenten und/oder handelsübliche Computerhard- und Software enthalten. Für das im Folgenden erläuterte Verfahren zum Überwachen des Abscheiders 1 ist es jedoch nebensächlich, welche für die Steuerung und Auswertung benutzten Teile oder Komponenten Bestandteile des magnetostriktiven Positionsmesssystems 20 sind und welche extern verwendet werden. Ein Fachmann wird eine Aufteilung nach praktischen Gesichtspunkten wählen. Im Folgenden wird daher von einer Steuer- und Auswerteeinrichtung 28, 30 für das magnetostriktive Positionsmesssystem 20 gesprochen.

Bei dem Verfahren zum Überwachen des Abscheiders 1 wird im Ausführungsbeispiel die Position des ersten Schwimmers 24 mit Hilfe des magnetostriktiven Positionsmesssystems 20 und der Steuer- und Auswerteeinrichtung 28, 30 in regelmäßigen Zeitabständen erfasst und gespeichert. Dies kann in maschinencodierter Weise erfolgen. In ähnlicher Weise wird auch die Position des zweiten Schwimmers 26 erfasst und gespeichert.

In einem normalen Betriebszustand, wie er in Figur 1 eingezeichnet ist, befindet sich der erste Schwimmer 24 oberhalb der Rohröffnung 7, und der zweite Schwimmer 26 ruht auf dem Stellring 27. Die Position des ersten Schwimmers 24 ist dabei ein Maß für die Menge an Leichtflüssigkeit 12 in der Kammer 2 und kann mit Hilfe der Steuer- und Auswerteeinrichtung 28, 30 zur Anzeige gebracht werden. Wenn die Position des ersten Schwimmers 24 einen vorgegebenen Tiefststand unterschreitet, kann eine Warnbenachrichtigung und/oder ein Alarmsignal ausgegeben werden, denn dann sollte die Leichtflüssigkeit 12 aus der Kammer 2 abgepumpt werden.

Wenn über den Zulauf 4 pro Zeiteinheit eine große Menge an Flüssigkeit in die Kammer 2 einströmt, wie es z.B. bei Starkregen der Fall ist, wird sich dann, wenn der Ablauf 8 ausreichend dimensioniert und nicht stark verschmutzt ist, wenig an dem erläuterten normalen Betriebszustand ändern. Das Ablaufniveau 19 und die Oberfläche 16 werden dabei etwas ansteigen, was aber keinen Störfall darstellt.

Anders ist die Situation, wenn der Ablauf so stark verschmutzt ist, dass der Strömungswiderstand in dem Ablauf 8 nennenswert vergrößert ist, so dass bei einsetzendem Starkregen das zuströmende Wasser nicht mehr schnell genug abfließen kann. Dann steigt (unter der Annahme einer im wesentlichen gleichbleibenden Menge an Leichtflüssigkeit 12) das Niveau der Grenzfläche 14 von dem Wert, den es zuletzt hatte und der in der Steuer- und Auswerteeinrichtung 28, 30 gespeichert ist, innerhalb eines vorgegebenen Zeitintervalls um mehr als einen vorgegebenen Grenzwert an, was als Alarm ausgegeben wird.

Eine zusätzliche Sicherheit bietet in dieser Situation der zweite Schwimmer 26. Da das Niveau der Oberfläche 16 ebenso wie das der Grenzfläche 14 erheblich ansteigt (und bei Zulauf von Leichtflüssigkeit sogar noch zusätzlich ansteigt), kann der zweite Schwimmer 26 von dem Stellring 27 abheben. Dies wird von dem magnetostriktiven Possitionsmesssystem 20 erfasst, was als Bestätigung für den obigen Alarm aufgefasst oder als weiterer Alarm ausgegeben werden kann.

Im Ausführungsbeispiel sind die erläuterten Verfahrensschritte in die Steuer- und Auswerteeinrichtung 28, 30 einprogrammiert.

## Patentansprüche

1. Verfahren zum Überwachen eines Abscheiders (1), bei dem sich in einer Kammer (2) eine leichtere Flüssigkeit (12) über einer schwereren Flüssigkeit (10) sammelt, in die ein Rohr (6) eintaucht, das eine Rohröffnung (7) aufweist und mit einem oberhalb der Rohröffnung (7) aus der Kammer (2) herausführenden Ablauf (8) verbunden ist, der ein Ablaufniveau (19) definiert, wobei ein erster Schwimmer (24) vorgesehen ist, der zum Schwimmen an der Grenzfläche (14) zwischen der schwereren (10) und der leichteren (12) Flüssigkeit eingerichtet ist,
- **dadurch gekennzeichnet,**
- **dass** in die Flüssigkeiten (10, 12) eine Führungseinrichtung (22) eines magnetostriktiven Positionsmesssystems (20) eintaucht, die einen magnetostriktiven Messdraht enthält und den ersten Schwimmer (24) führt, der mit einem Magneten versehen ist,
- wobei die Position des ersten Schwimmers (24) über eine Steuer- und Auswerteeinrichtung (28, 30) für das magnetostriktive Positionsmesssystem (20) überwacht wird,
- **dass** die Steuer- und Auswerteeinrichtung (28, 30) die Position des ersten Schwimmers (24) als Funktion der Zeit überwacht und
- **dass** die Steuer- und Auswerteeinrichtung (28, 30) eine Kennzeichnung für einen behinderten Ablauf aus der Kammer (2) erzeugt, wenn die Position des ersten Schwimmers (24) innerhalb eines vorgegebenen Zeitintervalls um mehr als einen vorgegebenen Wert ansteigt.

2. Verfahren nach Anspruch 1, **dadurch gekennzeichnet, dass** die Steuer- und Auswerteeinrichtung (28, 30) mittels der Position des ersten Schwimmers (24) eine Kennzeichnung für die Menge an leichterer Flüssigkeit (12) in der Kammer (2) erzeugt.

3. Verfahren nach Anspruch 1 oder 2, **dadurch gekennzeichnet, dass** die Führungseinrichtung (22) einen mit einem Magneten versehenen zweiten Schwimmer (26) führt, der zum Schwimmen an der Oberfläche (16) der leichteren Flüssigkeit (12) eingerichtet ist, und dass die Steuer- und Auswerteeinrichtung (28, 30) eine Kennzeichnung für einen behinderten Ablauf aus der Kammer (2) erzeugt, wenn die Position des zweiten Schwimmers (26) einen vorgegebenen Wert übersteigt.

4. Verfahren nach Anspruch 3, **dadurch gekennzeichnet, dass** im Normalbetrieb der zweite Schwimmer (26) an einer Auflagefläche (27) gelagert ist, die oberhalb des Ablaufniveaus (19) angebracht ist.

5. Verfahren nach einem der Ansprüche 1 bis 4, **dadurch gekennzeichnet, dass** der zeitliche Verlauf der Position des ersten Schwimmers (24) und optional der Position des zweiten Schwimmers (26) gespeichert wird.

6. Vorrichtung zur Überwachung eines Abscheiders, bei dem sich in einer Kammer (2) eine leichtere Flüssigkeit (12) über einer schwereren Flüssigkeit (10) sammelt, in die ein Rohr (6) eintaucht, das eine Rohröffnung (7) aufweist und mit einem oberhalb der Rohröffnung (7) aus der Kammer (2) herausführenden Ablauf (8) verbunden ist, der ein Ablaufniveau (19) definiert, wobei ein erster Schwimmer (24) vorgesehen ist, der zum Schwimmen an der Grenzfläche (14) zwischen der schwereren (10) und der leichteren (12) Flüssigkeit eingerichtet ist, **gekennzeichnet durch** ein magnetostriktives Positionsmesssystem (20) mit einer zum Eintauchen in die Flüssigkeiten (10, 12) eingerichteten Führungseinrichtung (22), die einen magnetostriktiven Messdraht enthält und den ersten Schwimmer (24) führt, der mit einem Magneten versehen ist, wobei die Vorrichtung ferner eine Steuer- und Auswerteeinrichtung (28, 30) für das magnetostriktive Positionsmesssystem (20) aufweist, die dazu eingerichtet ist, die Position des ersten Schwimmers (24) als Funktion der Zeit zu überwachen und eine Kennzeichnung für einen behinderten Ablauf aus der Kammer (2) zu erzeugen, wenn die Position des ersten Schwimmers (24) innerhalb eines vorgegebenen Zeitintervalls um mehr als einen vorgegebenen Wert ansteigt.

7. Vorrichtung nach Anspruch 6, **dadurch gekennzeichnet, dass** die Führungseinrichtung (22) einen mit einem Magneten versehenen zweiten Schwimmer (26) führt, der zum Schwimmen an der Oberfläche (16) der leichteren Flüssigkeit (12) eingerichtet ist, wobei vorzugsweise im Normalbetrieb der zweite Schwimmer (26) an einer Auflagefläche (27) gelagert ist, die oberhalb des Ablaufniveaus (19) angebracht ist.

8. Vorrichtung nach Anspruch 6 oder 7, **dadurch gekennzeichnet, dass** die Vorrichtung zum Durchführen des Verfahrens nach einem der Ansprüche 1 bis 5 eingerichtet ist.

## Claims

1. Method for monitoring a separator (1) in which a lighter liquid (12) is accumulating above a heavier liquid (10) in a chamber (2), in which liquids a pipe (6) is immersed, which pipe comprises a pipe opening (7) and which is connected to an outlet (8) leading out of the chamber (2) above the pipe opening (7), which outlet defines an outlet level (19), wherein a first float (24) is provided which is adapted to float at the boundary surface (14) between the heavier liquid (10) and the lighter liquid (12),
- **characterized**
- **in that** a guiding device (22) of a magnetostrictive position measuring system (20) is immersed in the liquids (10, 12), which guiding device includes a magnetostrictive measuring wire and which guides the first float (24) which is provided with a magnet,
- wherein the position of the first float (24) is monitored by a control and analysis device (28, 30) for the magnetostrictive position measuring system (20),
- **in that** the control and analysis device (28, 30) monitors the position of the first float (24) as a function of time and
- **in that** the control and analysis device (28, 30) generates an indication for a obstructed outlet from the chamber (2) if the position of the first float (24) increases within a predetermined time interval by more than a predetermined value.

2. Method according to claim 1, **characterized in that** the control and analysis device (28, 30) generates, based on the position of the first float (24), an indication for the amount of lighter liquid (12) in the chamber (2).

3. Method according to claim 1 or 2, **characterized in that** the guiding device (22) guides a second float (26) which is provided with a magnet and which is adapted to float at the surface (16) of the lighter liquid (12), and **in that** the control and analysis device (28, 30) generates an indication for an obstructed outlet from the chamber (2) if the position of the second float (26) exceeds a predetermined value.

4. Method according to claim 3, **characterized in that** during normal operation the second float (26) rests on a support area (27) which is mounted above the outlet level (19).

5. Method according to any of the claims 1 to 4, **characterized in that** the temporal development of the position of the first float (24) is stored, and optionally the temporal development of the position of the second float (26) is stored.

6. Device for monitoring a separator in which a lighter liquid (12) is accumulating above a heavier liquid (10) in a chamber (2), in which liquids a pipe (6) is immersed, which pipe comprises a pipe opening (7) and which is connected to an outlet (8) leading out of the chamber (2) above the pipe opening (7), wherein the outlet defines an outlet level (19), wherein a first float (24) is provided which is adapted to float at the boundary surface (14) between the heavier liquid (10) and the lighter liquid (12), **characterized by** a magnetostrictive position measuring system (20) comprising a guiding device (22) configured to be immersed in the liquids (10, 12), which guiding device contains a magnetostrictive measuring wire and which guides the first float (24) which is provided with a magnet, wherein the device further comprises a control and analysis device (28, 30) for the magnetorestrictive position measuring system (20), which control and analysis device (28, 30) is adapted to monitor the position of the first float (24) as a function of time and to generate an indication for an obstructed outlet from the chamber (2) if the position of the first float (24) is increasing within a predetermined time interval by more than a predetermined value.

7. Device according to claim 6, **characterized in that** the guiding device (22) guides a second float (26) provided with a magnet, which second float is adapted to float at the surface (16) of the lighter liquid (12), wherein during normal operation the second float (26) rests on a support area (27) which is mounted above the outlet level (19).

8. Device according to claim 6 or 7, **characterized in that** the device is adapted to perform a method according to any of the claims 1 to 5.

## Revendications

1. Procédé de surveillance d'un séparateur (1), dans lequel un liquide (12) plus léger s'accumule au-dessus d'un liquide plus lourd (10) dans une chambre (2), dans lesquels liquides un tube (6) plonge, lequel tube comprend une ouverture de tube (7) et est raccordé à une sortie (8) menant hors de la chambre (2) au-dessus de l'ouverture de tube (7), laquelle sortie définit un niveau de sortie (19), dans lequel un premier flotteur (24) est prévu, lequel est adapté pour flotter au niveau de la surface limite (14) entre le liquide plus lourd (10) et le liquide plus léger (12),
- **caractérisé en ce**
- **qu'**un dispositif de guidage (22) d'un système de mesure de position magnétostrictif (20) plonge dans les liquides (10, 12), lequel dispositif de guidage contient un fil de mesure magnétostrictif et guide le premier flotteur (24) qui est doté d'un aimant,
- dans lequel la position du premier flotteur (24) est surveillée par un dispositif de commande et d'analyse (28, 30) pour le système de mesure de position magnétostrictif (20),
- **que** le dispositif de commande et d'analyse (28, 30) surveille la position du premier flotteur (24) en fonction du temps et
- **que** le dispositif de commande et d'analyse (28, 30) génère une indication pour une sortie obstruée de la chambre (2) si la position du premier flotteur (24) augmente dans un intervalle de temps prédéterminé de plus d'une valeur prédéterminée.

2. Procédé selon la revendication 1, **caractérisé en ce que** le dispositif de commande et d'analyse (28, 30) génère, sur la base de la position du premier flotteur (24), une indication pour la quantité de liquide plus léger (12) dans la chambre (2).

3. Procédé selon la revendication 1 ou 2, **caractérisé en ce que** le dispositif de guidage (22) guide un second flotteur (26) doté d'un aimant qui est adapté pour flotter au niveau de la surface (16) du liquide plus léger (12), et **en ce que** le dispositif de commande et d'analyse (28, 30) génère une indication pour une sortie obstruée de la chambre (2) si la position du second flotteur (26) excède une valeur prédéterminée.

4. Procédé selon la revendication 3, **caractérisé en ce que** pendant le fonctionnement normal le second flotteur (26) est logé au niveau d'une surface d'appui (27) qui est montée au-dessus du niveau de sortie (19).

5. Procédé selon l'une quelconque des revendications 1 à 4, **caractérisé en ce que** le développement temporel de la position du premier flotteur (24) est enregistré, et en option le développement temporel de la position du second flotteur (26) est enregistré.

6. Dispositif de surveillance d'un séparateur, dans lequel un liquide plus léger (12) s'accumule au-dessus d'un liquide plus lourd (10) dans une chambre (2), dans lesquels liquides un tube (6) plonge, lequel tube présente une ouverture de tube (7) et est raccordé à une sortie (8) menant hors de la chambre (2) au-dessus de l'ouverture de tube (7), la sortie définit une niveau de sortie (19), dans lequel un premier flotteur (24) est prévu, lequel est adapté pour flotter au niveau de la surface limite (14) entre le liquide plus lourd (10) et le liquide plus léger (12), **caractérisé par** un système de mesure de position magnétostrictif (20) avec un dispositif de guidage (22) configuré pour plonger dans les liquides (10, 12), lequel dispositif de guidage contient un fil de mesure magnétostrictif et guide le premier flotteur (24) qui est doté d'un aimant, dans lequel le dispositif comprend en outre un dispositif de commande et d'analyse (28, 30) pour le système de mesure de position magnétostrictif (20), lequel dispositif de commande et d'analyse est adapté pour surveiller la position du premier flotteur (24) en fonction du temps et pour générer une indication pour une sortie obstruée de la chambre (2) si la position du premier flotteur (24) augmente dans un intervalle de temps prédéterminé de plus d'une valeur prédéterminée.

7. Dispositif selon la revendication 6, **caractérisé en ce que** le dispositif de guidage (22) guide un second flotteur (26) doté d'un aimant, lequel second flotteur est adapté pour flotter au niveau de la surface (16) du liquide plus léger (12), dans lequel pendant le fonctionnement normal le second flotteur (26) est de préférence logé au niveau d'une surface d'appui (27) qui est montée au-dessus du niveau de sortie (19).

8. Dispositif selon la revendication 6 ou 7, **caractérisé en ce que** le dispositif est adapté pour réaliser un procédé selon l'une des revendications 1 à 5.
